# EUROPEAN PATENT SPECIFICATION

(11) **EP 0 475 917 B1**
(45) Date of publication and mention of the grant of the patent: **13.04.1994**
(21) Application number: 91830370.2
(22) Date of filing: 10.09.1991
(51) Int. Cl.: E04C 5/01, C04B 14/48, B21B 1/16, B21F 45/00

(54) **A metal fibre for reinforcing concrete**
Metallfaser zur Betonarmierung
Fibre en métal pour armer le béton

(30) Priority: 12.09.1990 IT 6768390
(43) Date of publication of application: 18.03.1992
(73) Proprietor: OFFICINE MACCAFERRI S.p.A., 40123 Bologna (IT)
(72) Inventor: Cinti, Raimondo, I-40139 Bologna (IT)
(74) Representative: Buzzi, Franco

(56) References cited:
- EP-A- 0 098 825
- EP-A- 0 105 385
- FR-A- 2 225 392
- FR-A- 2 453 958
- GB-A- 1 446 855

## Description

The present invention relates to a fibre for reinforcing concrete, of the type comprising a length of metal wire with a substantially straight central part and offset anchoring parts at its opposite ends.

Reinforcing fibres of this type are known, for example, from United States patent No. 3,900,667, from EP-A-0098 825 and from GB-A-1446 855.

More particularly, the invention is directed to a fibre of the above-referenced type, wherein each offset anchoring part comprises a straight portion parallel to the central part but offset laterally therefrom, and an oblique portion connecting the straight portion to the central part.
A fibre such as set forth in the above is known from FR-A-2.225.392, attemping to achieve a compromise between anchoring performance of the fibre relative to the concrete, and avoiding undesired hooking thereof with other fibres during mixing with the concrete. However, the configuration of the offset end parts of this known fibre has proved to be unsatisfactory as far as the requirement for an efficient tensile stress-resisting grip of the end parts thereof relative to the concrete is concerned.
Also known is in the art, from FR-A-2.453.958, a concrete reinforcing fibre which is formed into an indented profile along the entire length thereof, consisting of a plurality of successive cold-displaced segments arranged with an alternate displacement of 0.1-0.3 times the wire thickness, so that a lengthwise section thereof is of two parallel lines in the shape of battlements with the projecting part of one line opposite to the recessed parts of the other. In a preferred embodiment, the recessed parts are longer than the projecting parts and are connected thereto by oblique portions.
This known fibre, therefore, is deprived of a central tensile stress-resistant straight part and consequently, while increasing the anchorage effectiveness relative to the concrete, a critical inconvenience thereof is the risk of yelding or failure under tensile stress.

The object of the present invention is to provide a metal fibre of the type defined above which is particularly effective as regards its anchorage in the mass of concrete to be reinforced and is structurally very strong, but which at the same time is shaped so as to prevent problems of its hooking onto similar fibres as it is being mixed with the concrete.

A further object of the invention is to provide a metal fibre of the type defined above which can be produced easily and cheaply at fast production rates.

The reinforcing fibre according to the invention is characterised essentially in that each offset anchoring part further comprises a final straight portion coaxial with the central part and connected to said straight portion by a second oblique portion opposed to said oblique portion.

Conveniently, the two initial straight portions of the two offset anchoring parts are offset towards the same side of the central straight part of the fibre.

The length of the fibre according to the invention, which is made from drawn wire, may vary from 25 to 50 mm. The length is combined with a range of wire diameters according to the application of the concrete to which the fibres are added. Fibres with overall lengths of 25mm are intended mainly for application by spraying ("spritz beton") and are formed from wire whose diameter is conveniently between 0.5 and 0.8 mm. Fibres with overall lengths of 50 mm are intended essentially for addition to concrete of a more consistent particle size for paving or casting and are formed from wire whose diameter is conveniently between 0.8 and 1.15 mm. The dimensions of the offset end anchoring parts are the same in both cases but the lengths of the straight central parts vary. The amount by which the offset end parts project laterally is proportional to the diameter of the wire constituting the fibre and hence to the particle size of the concrete mix constituting the basic matrix of the concrete to which the fibres are added.

The basic material for producing the fibre according to the invention is conveniently drawn, round, carbon-steel wire with a minimum tensile strength of 80 kg/mm².

The invention will now be described in detail with reference to the appended drawings, provided purely by way of non-limiting example, in which:
Figure 1 is a schematic perspective view of a reinforcing fibre according to the invention,
Figure 2 is a side elevational view of the fibre,
Figure 3 is a schematic plan view of equipment for manufacturing the fibre,
Figure 4 is a side elevational view of a first component of the equipment of Figure 3, on an enlarged scale,
Figure 5 is a front elevational view taken on the arrow V of Figure 4, on an enlarged scale,
Figure 6 is a sectional view of the detail indicated by the arrow VI in Figure 4,
Figure 7 is a side elevational view of a second component of the equipment of Figure 3, on an enlarged scale,
Figure 8 is a front elevational view taken on the arrow VIII of Figure 7, and
Figure 9 is a sectional view of the detail indicated by the arrow IX in Figure 7, on an enlarged scale.

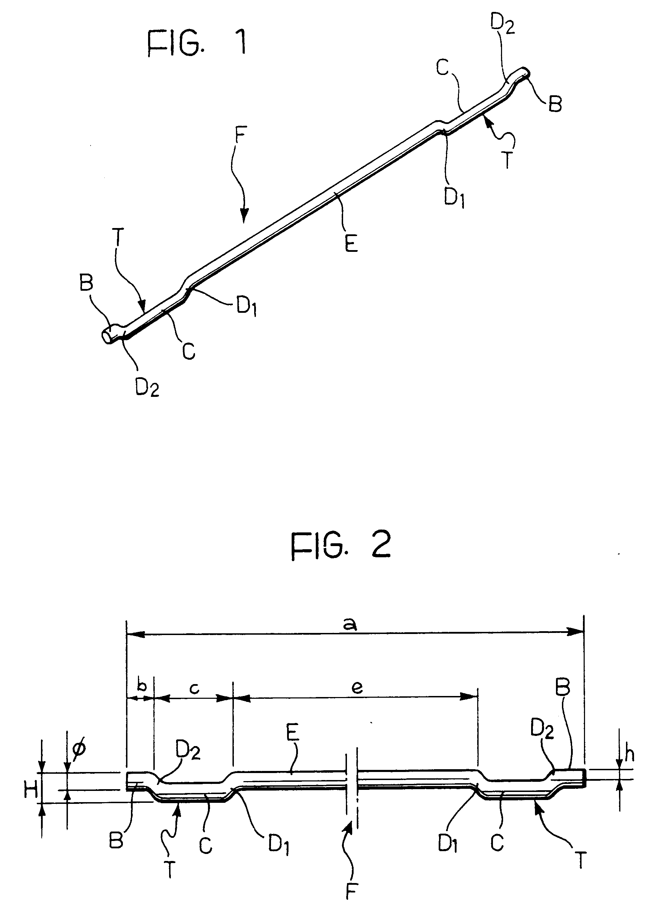

With reference to Figures 1 and 2, a fibre according to the invention for reinforcing concrete is generally indicated F.

The fibre F is constituted by a length of drawn, round carbon-steel wire with a minimum tensile strength of 80 kg/mm², having a particular shape which is adapted to afford it a more effective anchorage in the concrete.

In detail, the fibre F has a substantially straight central part E and two opposite, offset anchoring end parts T.

Each of the two offset ends T is constituted by a straight portion C parallel to the central part E and offset laterally therefrom, a final straight portion B coaxial with the central part E, and two opposed oblique portions D₁, D₂ connecting the initial straight portion C to the central part E and to the final straight portion B, respectively.

The two initial straight portions C of the two end parts T are offset towards the same side of the central straight part E: in other words, the two end parts T project from the same side of the fibre F.

The table below gives the optimum dimensional parameters found experimentally by the Applicant for the fibre F. With reference to Figure 2, the following dimensions are indicated in the table:
- 0̸: = the diameter of the wire
- a: = the overall length of the fibre F
- b: = the length of each final straight portion B
- c: = the length of each initial straight portion C and its oblique connecting portions D₁ and D₂
- e: = the length of the central straight part E
- h: = the lateral offset of each initial straight portion C from the central part E
- H: = the width of the fibre F in correspondence with its offset end parts T

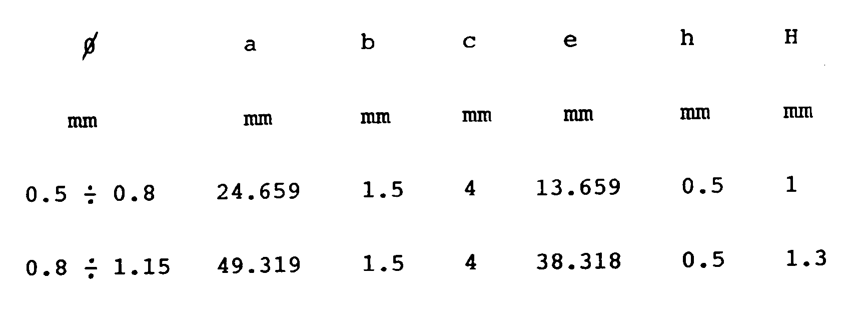

- Tolerances:: 0̸ +/- 0.03 mm.
a +/- 0.02 mm.

The fibre F with a diameter of between 0.5 and 0.8 mm and an overall length of about 25 mm is intended mainly for spraying applications, whilst that with a diameter of between 0.8 and 1.15 mm and an overall length of about 50 mm is intended for addition to concrete with a more consistent particle size.

The ways in which the fibre according to the invention is used for reinforcing concrete (the mixing methods, the aspect ratio, the number of fibres per unit volume) are conventional.

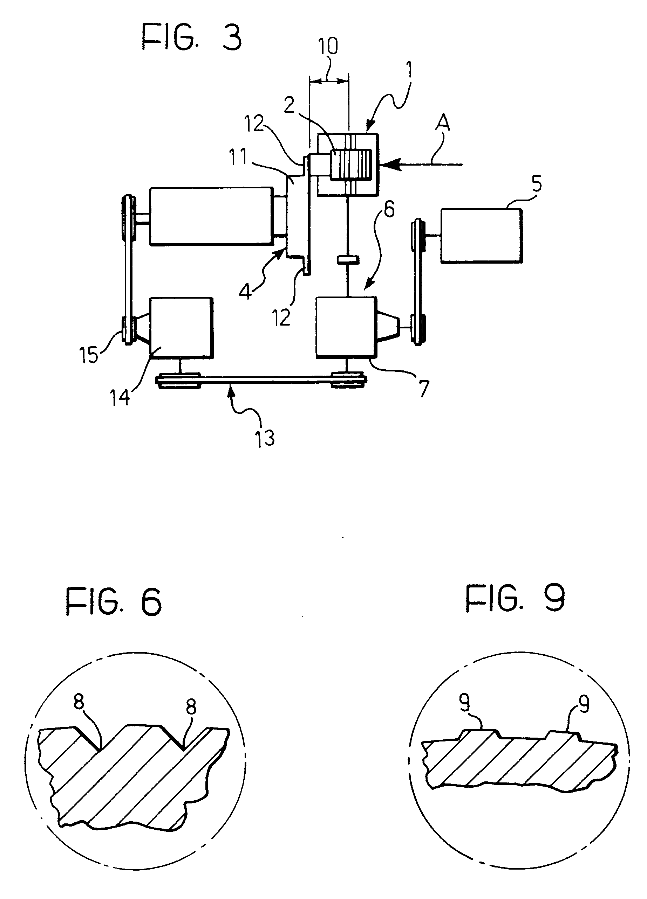

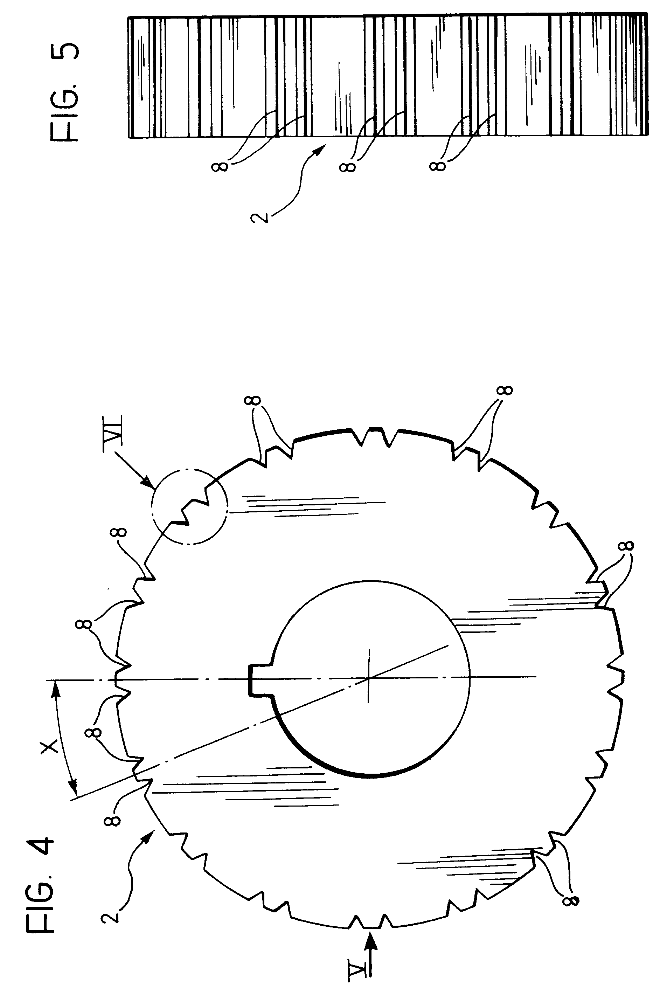

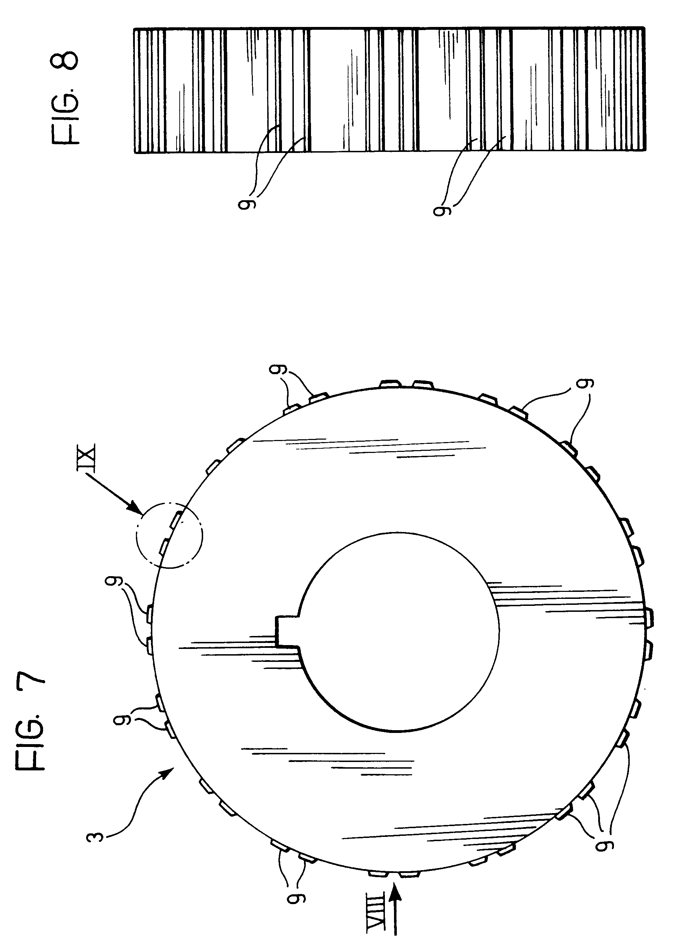

In order to produce the fibre F, an equipment whose essential components are shown schematically in Figure 3 can be conveniently employed. The equipment includes a unit 1 for entraining and forming the wire, constituted by a pair of opposed rollers 2 (Figures 4-6) and 3 (Figures 7-9) with parallel axes, and a cutting device 4 arranged downstream of the unit 1.

The unit 1 is supplied with a plurality of parallel wires produced in a conventional manner and collected in suitable intermediate bundles so as to ensure a continuous supply to the machine in the direction indicated by the arrow A in Figure 3. The two entraining and forming rollers 2, 3 are rotatable about respective axes perpendicular to the direction of supply A and are rotated by a motor 5 and a transmission, generally indicated 6, including an intermediate angle gear 7.

With reference in greater detail to Figures 4 to 6, the upper roller 2 has a series of pairs of adjacent axial grooves 8 with substantially V-shaped cross-sections on its periphery. The peripheral regions of the roller 2 between the central portions of each set of adjacent grooves 8 subtend angles indicated X in Figure 4 and constitute the dies for the wires supplied to the unit 1. In order to produce fibres F whose lengths a are 24.659 mm, the angle X is 22.5°. In order to produce fibres F with lengths a of 49.319 mm, the angle X is 45°. The outside diameter of the roller 2 is 125.651 mm.

The lower roller 3, which is shown in greater detail in Figures 7 to 9, has corresponding pairs of axial projections 9 on its periphery. In practice, the projections 9 act as punches cooperating with the dies 8 of the upper roller 2 and are arranged at the same angular spacing as the latter: the angular spacings X of the central regions of the pairs of adjacent projections 9 correspond to those given above with reference to the roller 2, as does the outside diameter.

The wires supplied in the direction A are entrained and formed by the rollers 2, 3 of the unit 1 along a calibrated path, indicated 10 in Figure 3, at the end of which the cutting device 4 is arranged. This device comprises a disc 11 which is rotatable about an axis parallel to and offset laterally from the path 10 and to which equiangularly-spaced radial blades 12 are fitted.

There are eight blades 12 for forming fibres F having a length a of 24.659 mm and four for forming fibres F having a lenght a of 49.319 mm.

The disc 4 is rotated by the motor 5 through a transmission, generally indicated 13, also including an intermediate angle gear unit 14 with which a synchronising device, schematically indicated 15, is associated. The synchronising device, whose configuration is within the capabilities of an expert in the art, has the function of ensuring that the rollers 2, 3 of the station 1 and the blades 12 of the cutting device 4 are in phase angularly.

In operation, the fibres F are formed and cut continuously and are then collected by a conveyor unit, not shown, located beneath the cutting device 4 for automatically boxing the fibres in dependence on the speed of operation of the equipment.

## Claims

1. A fibre (F) for reinforcing concrete, comprising a length of metal wire with a substantially straight central part (E) and offset anchoring parts (T) at opposite ends, each offset anchoring part comprising a straight portion (C) parallel to the central part (E) but offset laterally therefrom, and an oblique portion (D₁) connecting the straight portion to the central part (E), characterised in that each offset anchoring part (T) further comprises a final straight portion (B) coaxial with the central part (E) and connected to the straight portion (C) by a second oblique portion (D₂) opposed to said oblique portion (D₁).

2. A fibre according to Claim 1, characterised in that the initial straight portions (C) of the two offset end parts (T) are offset towards the same side of the straight central part (E) of the fibre (F).

3. A fibre according to Claim 1 or Claim 2, characterised in that:
- the wire has a constant circular cross-section with a diameter (0̸) of between 0.5 and 0.8 mm +/- 0.03 mm,
- the overall length (a) of the fibre (F) is substantially 25 mm +/- 0.02 mm,
- the length (e) of the central straight part (E) is between 13 and 14 mm,
- the length (b) of each final straight portion (B) is substantially 1.5 mm,
- the length (c) of each initial straight portion (C) with its oblique connecting portions (D₁, D₂) is substantially 4 mm,
- the width (H) of the fibre (F) measured in correspondence with its offset end parts (T) is substantially 1 mm,
- the lateral offset (h) of the initial straight portions (C) from the central part (E) is substantially 0.5 mm.

4. A fibre according to Claim 1 or Claim 2, characterised in that:
- the wire has a constant circular cross-section with a diameter (0̸) of between 0.8 and 1.15 mm +/- 0.03 mm,
- the overall length (a) of the fibre (F) is substantially 50 mm +/- 0.02 mm,
- the length (e) of the straight central part (E) is between 38 and 39 mm,
- the length (b) of each final straight portion (B) is substantially 1.5 mm,
- the length (c) of each initial straight portion (C) with its oblique connecting portions (D₁, D₂) is substantially 4 mm,
- the width (H) of the fibre (F) measured in correspondence with its offset end parts (T) is substantially 1.3 mm,
- the lateral offset (h) of the initial straight portions (C) from the central part (E) is substantially 0.5 mm.

5. A fibre according to any one of the preceding claims, characterised in that the wire is a drawn carbon-steel wire with a minimum tensile strength of 80 kg/mm².

## Patentansprüche

1. Faser (F) zum Armieren von Beton, mit einer Länge Metalldraht mit einem im wesentlichen geraden zentralen Teil (E) und versetzten Verankerungsteilen (T) an den einander entgegengesetzten Enden, wobei jeder versetzte Verankerungsteil einen geraden Bereich (C), der parallel zu dem zentralen Bereich (E), jedoch seitlich von diesem versetzt ist, und einen den geraden Bereich mit dem zentralen Teil (E) verbindenden schräg verlaufenden Bereich (D₁) aufweist,
dadurch gekennzeichnet, daß jeder versetzte Verankerungsteil (T) außerdem einen abschließenden geraden Bereich (B) aufweist, der zu dem zentralen Teil (E) koaxial ist und mit dem geraden Bereich (C) durch einen dem schräg verlaufenden Bereich (D₁) entgegengesetzten, zweiten schräg verlaufenden Bereich (D₂) verbunden ist.

2. Faser nach Anspruch 1,
dadurch gekennzeichnet, daß die anfänglichen geraden Bereiche (C) der beiden versetzten Endteile (T) in Richtung auf dieselbe Seite des geraden zentralen Teils (E) der Faser (F) versetzt sind.

3. Faser nach Anspruch 1 oder Anspruch 2,
dadurch gekennzeichnet, daß
der Draht einen konstanten kreisförmigen Querschnitt mit einem Durchmesser (ø) von 0,5 bis 0,8 mm +/- 0,03 mm aufweist, die Gesamtlänge (a) der Faser (F) im wesentlichen 25 mm +/- 0,02 mm beträgt,
die Länge (e) des zentralen geraden Teils (E) 13 bis 14 mm beträgt,
die Länge (b) jedes abschließenden geraden Bereichs (B) im wesentlichen 1,5 mm beträgt,
die Länge (c) jedes anfänglichen geraden Bereichs (C) mit seinen schräg verlaufenden Verbindungsbereichen (D₁, D₂) im wesentlichen 4 mm beträgt,
die Breite (H) der Faser (F) gemessen entsprechend ihren versetzten Endteilen (T) im wesentlichen 1 mm beträgt,
die seitliche Versetzung (h) der anfänglichen geraden Bereiche (C) von dem zentralen Teil (E) im wesentlichen 0,5 mm beträgt.

4. Faser nach Anspruch 1 oder Anspruch 2,
dadurch gekennzeichnet, daß
der Draht einen konstanten kreisförmigen Querschnitt mit einem Durchmesser (ø) von 0,8 bis 1,15 +/- 0,03 mm aufweist, die Gesamtlänge (a) der Faser (F) im wesentlichen 50 mm +/- 0,02 mm beträgt,
die Länge (e) des geraden zentralen Teils (E) 38 bis 39 mm beträgt,
die Länge (b) jedes abschließenden geraden Bereichs (B) im wesentlichen 1,5 mm beträgt,
die Länge (c) jedes anfänglichen geraden Bereichs (C) mit seinen schräg verlaufenden Verbindungsbereichen (D₁, D₂) im wesentlichen 4 mm beträgt,
die Breite (H) der Faser (F) gemessen entsprechend ihren versetzten Endteilen (T) im wesentlichen 1,3 mm beträgt,
die seitliche Versetzung (h) der anfänglichen geraden Bereiche (C) von dem zentralen Teil (E) im wesentlichen 0,5 mm beträgt.

5. Faser nach einem der vorausgehenden Ansprüche,
dadurch gekennzeichent, daß es sich bei dem Draht um einen gezogenen Kohlenstoffstahldraht mit einer Mindestzugfestigkeit von 80 kg/mm² handelt.

## Revendications

1. Fibre (F) destinée à armer le béton, comprenant une longueur de fil métallique présentant une partie centrale (E) sensiblement droite et des parties d'ancrage décalées (T) à ses extrémités opposées, chaque partie d'ancrage décalée comprenant une portion droite (C) parallèle à la partie centrale (E) mais décalée latéralement par rapport à celle-ci et une portion oblique (D1) reliant la portion droite à la partie centrale (E), caractérisée en ce que chaque partie d'ancrage décalée (T) comprend, en outre, une portion terminale droite (B) coaxiale à la partie centrale (E) et reliée à la portion droite (C) par une seconde portion oblique (D2) opposée à la portion oblique (D1).

2. Fibre selon la revendication 1, caractérisée en ce que les portions droites initiales (C) des deux extrémités décalées (T) sont décalées du même côté de la partie centrale droite (E) de la fibre (F).

3. Fibre selon la revendication 1 ou la revendication 2, caractérisée en ce que :
- le fil métallique possède une section transversale circulaire constante, avec un diamètre (φ) situé entre 0,5 et 0,8 mm +/- 0,03 mm,
- la longueur hors-tout (a) de la fibre (F) est sensiblement de 25 mm +/- 0,02 mm,
- la longueur (e) de la partie centrale droite (E) se situe entre 13 et 14 mm,
- la longueur (b) de chaque portion terminale droite (B) est sensiblement de 1,5 mm,
- la longueur (c) de chaque portion droite initiale (C), avec ses portions de liaison obliques (D1, D2) est sensiblement de 4 mm,
- la largeur (H) de la fibre (F), mesurée en correspondance avec ses extrémités décalées (T) est sensiblement de 1 mm,
- le décalage latéral (h) des portions droites initiales (C) par rapport à la partie centrale (E) est sensiblement de 0,5 mm.

4. Fibre selon la revendication 1 ou la revendication 2, caractérisée en ce que :
- le fil métallique possède une section transversale circulaire constante, avec un diamètre (φ) situé entre 0,8 et 1,15 mm +/- 0,03 mm,
- la longueur hors-tout (a) de la fibre (F) est sensiblement de 50 mm +/- 0,02 mm,
- la longueur (e) de la partie centrale droite (E) se situe entre 38 et 39 mm,
- la longueur (b) de chaque portion terminale droite (B) est sensiblement de 1,5 mm,
- la longueur (c) de chaque portion droite initiale (C), avec ses portions de liaison obliques (D1, D2) est sensiblement de 4 mm,
- la largeur (H) de la fibre (F), mesurée en correspondance avec ses extrémités décalées (T) est sensiblement de 1,3 mm,
- le décalage latéral (h) des portions droites initiales (C) par rapport à la partie centrale (E) est sensiblement de 0,5 mm.

5. Fibre selon l'une quelconque des revendications précédentes, caractérisée en ce que le fil métallique est un fil en acier au carbone, rond et étiré, avec une résistance minimum à la traction de 80 kg/mm².
